# EUROPÄISCHE PATENTANMELDUNG

(11) **EP 2 806 105 A1**
(43) Veröffentlichungstag der Anmeldung: **26.11.2014**
(21) Anmeldenummer: 13002703.0
(22) Anmeldetag: 23.05.2013
(51) Int. Cl.: F01D 5/16, F01D 5/26, F01D 25/06

(54) **Turbomaschinenschaufel mit einem Impulskörper**

(71) Anmelder: MTU Aero Engines AG, 80995 München (DE)
(72) Erfinder: Stiehler, Frank, 04924 Bad Liebenwerda (DE); Dr. Hartung, Andreas, 81829 München (DE)
(74) Vertreter: Schlotter, Alexander Carolus Paul

(57) **Zusammenfassung**

Die vorliegende Erfindung betrifft eine Schaufel (1) für eine Turbomaschine, mit einer Stoßkammer (2), wobei in der Stoßkammer ein einziger Impulskörper (3) angeordnet ist, wobei ein Spiel (S1+S2) zwischen dem Impulskörper und der Stoßkammer in wenigstens einer Richtung wenigstens 10 µm und/oder höchstens 1,5 mm beträgt.

## Beschreibung

Die vorliegende Erfindung betrifft eine Schaufel für eine Turbomaschine, eine Turbomaschine, insbesondere eine Gasturbine, insbesondere eine Flugtriebwerk-Gasturbine, mit einer solchen Schaufel sowie ein Verfahren zum Herstellen einer solchen Schaufel.

Insbesondere Leit- und Laufschaufeln von Flugtriebwerk-Gasturbinen können aerofluiddynamisch, thermisch und/oder strukturmechanisch zu Schwingungen angeregt werden. Dabei kann es insbesondere zu selbsterregten Schwingungen kommen.

Aus der DE 10 2009 O10 185 A1 ist es bekannt, in einem Hohlraum in einem Schaufelblatt mehrere Dämpfungskörper vorzusehen, die sich unabhängig voneinander relativ zu den Wänden des Hohlraums und relativ zueinander bewegen können, um durch elastische Stöße gegeneinander und gegen die Wände des Hohlraums Schwingungen zu dämpfen.

Ausgehend hiervon ist es eine Aufgabe der vorliegenden Erfindung, eine verbesserte Turbomaschine zur Verfügung zu stellen.

Diese Aufgabe wird durch eine Schaufel mit den Merkmalen des Anspruchs 1 gelöst. Anspruch 9 stellt eine Turbomaschine mit einer solchen Schaufel, Anspruch 10 ein Verfahren zum Herstellen einer solchen Schaufel unter Schutz. Vorteilhafte Weiterbildungen sind Gegenstand der Unteransprüche.

Nach einem Aspekt der vorliegenden Erfindung weist eine Schaufel für eine Turbomaschine eine, insbesondere genau eine bzw. eine einzige, oder mehrere Stoßkammern auf, in der bzw. in denen jeweils ein einziger Impulskörper angeordnet ist, wobei in wenigstens einer Richtung ein Spiel zwischen dem Impulskörper und der Stoßkammer vorgesehen ist, welches wenigstens 10 µm und/oder höchstens 1,5 mm beträgt.

Diesem Aspekt liegt ein neuartiges Schwingungsdämpfungskonzept zugrunde. Während bisher Schaufelschwingungen durch Reibung zwischen Reibkörpern und Reibflächen der Schaufel oder durch Vielfachkontakte zwischen mehreren Körpern gedämpft wurden, die zur Erhöhung der Entropie größere Bewegungsräume benötigen, nutzt dieser Aspekt geringe Einzelstöße durch einen in einer Stoßkammer, insbesondere stochastisch oder regelmäßig wiederkehrend oszillierenden Impulskörper. Um dabei einen signifikanten schwingungsdämpfenden Effekt zu erreichen, ist erfindungsgemäß ein wohldefinierter Spielbereich in Stoßrichtung erforderlich, da sich nur dann der gewünschte Effekt einstellt. Entsprechend ist nach diesem Aspekt der vorliegenden Erfindung eine Untergrenze von 10 µm und/oder eine Obergrenze von 1,5 mm für das Spiel vorgesehen, wobei unter Spiel vorliegend insbesondere eine freie Bewegungsmöglichkeit bzw. ein Spalt verstanden wird. In einer Weiterbildung kann das Spiel wenigstens 0,05 mm, insbesondere wenigstens 0,1 mm, insbesondere wenigstens 0,5 mm betragen. Zusätzlich oder alternativ kann das Spiel höchstens 1,2 mm, insbesondere höchstens 1,0 mm, insbesondere höchstens 0,8 mm betragen.

Spiel bzw. ein Spalt zwischen dem Impulskörper und der Stoßkammer kann in allen Richtungen vorgesehen sein, insbesondere kann es in allen Richtungen gleich groß sein. Weist beispielsweise der Impulskörper in einer Ausführung, wenigstens im Wesentlichen, eine kugelförmige Außenkontur auf, eine Stoßkammer in einer Ausführung, wenigstens im Wesentlichen, eine sphärische Innenkontur mit größerem Durchmesser, so definiert die Durchmesserdifferenz das in alle Richtungen gleich große Spiel zwischen dem Impulskörper und der Stoßkammer.

Gleichermaßen können in einer Ausführung eine oder mehrere Vorzugsstoßrichtungen durch die Stoßkammer definiert sein. Weist beispielsweise der Impulskörper in einer Ausführung, wenigstens im Wesentlichen, einen kreisförmigen Querschnitt auf, die Stoßkammer in einer Ausführung, wenigstens im Wesentlichen, eine kreiszylinderförmige Innenkontur, insbesondere mit, wenigstens im Wesentlichen, demselben Durchmesser, so definiert die Längsachse der Innenkontur das Spiel zwischen dem Impulskörper und den Stirnseiten der Stoßkammer.

Allgemein kann eine Vorzugsstoßrichtung zwischen einem Paar einander gegenüberliegender, insbesondere paralleler Innenwände der Stoßkammer definiert sein, beispielsweise den Stirnseiten einer kreiszylinderförmigen Stoßkammer. Gleichermaßen kann die Stoßkammer in einer Ausführung, wenigstens im Wesentlichen, quaderförmig oder als Oktaeder oder anderer Polyeder mit einem oder mehreren (bei einem Quader beispielsweise drei) Paaren einander jeweils gegenüberliegender, insbesondere paralleler Innenwände der Stoßkammer ausgebildet sein, wobei zwei einander jeweils gegenüberliegende Innenwände jeweils eine Vorzugsstoßrichtung zwischen sich definieren, und wobei wenigstens in einer, insbesondere in allen Vorzugsstoßrichtungen jeweils ein Spiel zwischen dem Impulskörper und der Stoßkammer vorgesehen ist, welches wenigstens 10 µm, insbesondere wenigstens 0,05 mm, insbesondere wenigstens 0,1 mm, insbesondere wenigstens 0,5 mm und/oder höchstens 1,5 mm, insbesondere höchstens 1,2 mm, insbesondere höchstens 1,0 mm, insbesondere höchstens 0,8 mm beträgt.

In einer Ausführung sind eine oder mehrere Vorzugsstoßrichtungen jeweils in Richtung einer, insbesondere ersten, Biege-, Torsions- oder gekoppelten Eigenschwingform der Schaufel angeordnet, insbesondere, wenigstens im Wesentlichen, in Richtung und/oder an dem Ort einer maximalen Amplitude bzw. Auslenkung dieser Eigenschwingform. Hierdurch können insbesondere diese Eigenschwingformen wirkungsvoll gedämpft werden.

Es hat sich herausgestellt, dass dieses neue schwingungsdämpfende Prinzip durch einzelne Impulskörper mit eng begrenztem Spiel sensitiv hinsichtlich der Masse des Impulskörpers sein kann. Daher ist in einer Ausführung der vorliegenden Erfindung für die Masse des Impulskörpers eine Untergrenze von 10 mg und/oder eine Obergrenze von 1,5 g vorgesehen. In einer Weiterbildung kann die Masse wenigstens 0,03 g, insbesondere wenigstens 0,1 g, insbesondere wenigstens 0,5 g betragen. Zusätzlich oder alternativ kann die Masse höchstens 1,2 g, insbesondere höchstens 1,0 g, insbesondere höchstens 0,8 g betragen.

In einer Ausführung ist der Impulskörper aus einer, insbesondere hochwarmfesten, insbesondere für Betriebstemperaturen zwischen 700°C und 1100°C geeigneten, Nickel- oder Kobaltlegierung oder einer, insbesondere oxidischen oder nichtoxidischen, Keramik hergestellt.

Wie bereits erläutert, kann der Impulskörper, wenigstens im Wesentlichen, kugelförmig ausgebildet sein. Gleichermaßen kann er in einer Ausführung auch kreiszylinder- oder scheibenförmig, insbesondere kreisscheibenförmig, ausgebildet sein. In einer Ausführung ist eine Außenkontor des Impulskörpers in wenigstens einem, insbesondere in genau einem oder genau zwei oder drei, insbesondere aufeinander senkrecht stehenden, oder allen Querschnitten, wenigstens im Wesentlichen, kongruent zu einer Innenkontur der Stoßkammer, wobei zwischen beiden in dem jeweiligen Querschnitt jeweils insbesondere das vorstehend erläuterte Spiel oder eine Spielpassung vorgesehen sein kann, um ein Stoßen bzw. eine geführte Bewegung zu realisieren. So ist beispielsweise ein kugelförmiger Impulskörper in allen Querschnitten kongruent zu einer sphärischen Stoßkammer, ein kreiszylinderförmiger Impulskörper in genau einem Querschnitten senkrecht zu seiner Zylinderlängsachse kongruent zu einer kreiszylinderförmigen Stoßkammer, wobei in diesem Querschnitt eine Spielpassung vorgesehen sein kann, um eine geführte Bewegung zu realisieren, während das Spiel zwischen den Stirnseiten vorgesehen sein kann. Ein kreisscheibenförmiger Impulskörper in einer quaderförmigen Stoßkammer weist beispielsweise in genau einem Querschnitt eine kreisförmige Außenkontur auf, die nicht kongruent zu der in diesem Querschnitt rechteckigen Innenkontur der Stoßkammer ist. Zwischen einem oder beiden Paaren einander gegenüberliegender Seiten dieser rechteckigen Innenkontur kann ein erfindungsgemäßes Spiel und damit eine Vorzugsstoßrichtung definiert sein. In Querschnitten senkrecht zu diesem Querschnitt weist auch der kreisscheibenförmige Impulskörper eine rechteckige Außenkontur auf. In einem oder mehreren dieser Querschnitte kann jeweils ein erfindungsgemäßes Spiel definiert sein. Gleichermaßen kann auch eine Spielpassung vorgesehen sein, so dass der Impulskörper in diesem Querschnitt durch die Stoßkammer verschiebbar geführt ist.

In einer Ausführung kann eine Symmetrieachse der Stoßkammer bzw. eine durch die Stoßkammer definierte Vorzugsstoßrichtung mit einer Schaufellängsachse bzw. einer Radialrichtung einen Winkel bilden, der zwischen 0° und 20° beträgt.

Eine Stoßkammer kann insbesondere in einem Außendeckband, insbesondere einem sich wenigstens im Wesentlichen radial erstreckenden Außendeckbandflügel, angeordnet sein, da hier große Biege- und Torsionsamplituden auftreten. Zusätzlich oder alternativ kann eine Stoßkammer in einem, insbesondere hohlen, Schaufelblatt angeordnet sein, da hier ausreichend Bauraum zur Verfügung steht und höhere Biege- und Torsionseigenformen gut beeinfluß- bzw. steuerbar sind. Zusätzlich oder alternativ kann eine Stoßkammer in einem Schaufelfuß der Schaufel angeordnet sein, da dieser leicht zugänglich und/oder stabil ist.

Eine Stoßkammer kann in einer Ausführung durch einen Deckel verschlossen werden bzw. sein, der in einer Weiterbildung lösbar oder dauerhaft, insbesondere reib-, form- oder stoffschlüssig mit dem Stoßkammerrand bzw. der Schaufel verbunden werden bzw. sein kann, insbesondere verklebt, -schweißt, -lötet, -schraubt oder - stemmt. In einer Weiterbildung fluchtet der Deckel mit einer Außenkontur der Schaufel, so dass durch die geschlossene Stoßkammer die Außenkontur der Schaufel nicht bzw. nur minimal gestört wird.

Gleichermaßen kann eine Stoßkammer durch eine angrenzende Schaufel verschlossen werden bzw. sein, insbesondere durch eine Stirnseite eines angrenzenden Deckbandes oder Schaufelfußes. Auf diese Weise kann die Stoßkammer bei der Montage durch die benachbarte Schaufel verschlossen werden.

Gleichermaßen kann eine Stoßkammer durch ein Gehäuse, eine Nabe oder einen Rotor der Turbomaschine verschlossen werden bzw. sein. Ist die Stoßkammer beispielsweise in einem Schaufelfuß einer Laufschaufel oder einem Deckband einer Leitschaufel nach radial innen offen ausgebildet, kann sie durch den Rotor, an dem die Laufschaufel befestigt ist bzw. wird, bzw. durch die Nabe, an dem die Leitschaufel befestigt ist bzw. wird, verschlossen werden bzw. sein.

In einer Ausführung wird bzw. ist die Stoßkammer zusammen mit der Schaufel urgeformt, insbesondere gegossen. Gleichermaßen kann die Stoßkammer auch nachträglich materialabtragend in der Schaufeloberfläche hergestellt werden bzw. sein, insbesondere durch Bohren, Fräsen, Erodieren oder elektrochemisches Bearbeiten.

In einer Ausführung wird bzw. ist die Stoßkammer durch eine Kalotte bzw. ein Gehäuse definiert, welche in einer Aussparung in der Schaufel angeordnet und dort in einer Weiterbildung stoff-, reib- oder formschlüssig, befestigt werden bzw. sein kann, insbesondere verklebt, -schweißt, -lötet, -schraubt oder -stemmt.

In einer Ausführung ist die Schaufel eine Laufschaufel. Gleichermaßen kann die Schaufel eine Leitschaufel sein.

Nach einem Aspekt der vorliegenden Erfindung ist eine erfindungsgemäße Stoßkammer mit Impulskörper in einer oder mehreren Leit- und/oder Laufschaufeln einer oder mehreren Verdichter- und/oder Turbinenstufen einer Gasturbine, insbesondere einer Flugtriebwerk-Gasturbine vorgesehen.

Zum Herstellen einer Schaufel wird nach einem Aspekt der vorliegenden Erfindung zunächst die Stoßkammer in der Schaufel ausgebildet, anschließend der Impulskörper in die Stoßkammer eingeführt und dann die Stoßkammer verschlossen

Weitere Vorteile und Merkmale ergeben sich aus den Unteransprüchen und den Ausführungsbeispielen. Hierzu zeigt, teilweise schematisiert:
- Fig. 1A:: einen Deckbandbereich einer Schaufel einer Gasturbine nach einer Ausführung der vorliegenden Erfindung mit geöffneter Stoßkammer;
- Fig. 1B:: einen vergrößerten Schnitt des Stoßkammerbereichs der Fig. 1A;
- Fig. 2A:: einen Deckbandbereich einer Schaufel einer Gasturbine nach einer weiteren Ausführung der vorliegenden Erfindung mit geöffneter Stoßkammer;
- Fig. 2B:: einen vergrößerten Schnitt des Stoßkammerbereichs der Fig. 2A;
- Fig. 3A:: einen Deckbandbereich einer Schaufel einer Gasturbine nach einer weiteren Ausführung der vorliegenden Erfindung mit geöffneter Stoßkammer;
- Fig. 3B:: einen vergrößerten Schnitt des Stoßkammerbereichs der Fig. 3A;
- Fig. 4A:: eine perspektivische Ansicht einer Schaufel einer Gasturbine nach einer weiteren Ausführung der vorliegenden Erfindung mit geöffneter Stoßkammer;
- Fig. 4B:: einen vergrößerten Schnitt des Stoßkammerbereichs der Fig. 4A;
- Fig. 5A:: eine perspektivische Ansicht einer Schaufel einer Gasturbine nach einer weiteren Ausführung der vorliegenden Erfindung mit geöffneter Stoßkammer;
- Fig. 5B:: einen vergrößerten Schnitt des Stoßkammerbereichs der Fig. 5A;
- Fig. 6A:: einen Schnitt durch eine Schaufel einer Gasturbine nach einer weiteren Ausführung der vorliegenden Erfindung und eine benachbarte Schaufel;
- Fig. 6B:: einen vergrößerten Schnitt des Deckbandbereichs der beiden benachbarten Schaufeln der Fig. 6A;
- Fig. 7A:: einen Schnitt durch eine hohle Schaufel einer Gasturbine nach einer weiteren Ausführung der vorliegenden Erfindung;
- Fig. 7B:: einen vergrößerten Ausschnitt der Fig. 7A;
- Fig. 7C:: einen Querschnitt durch den Stoßkammerbereich der Fig. 7B;
- Fig. 8:: einen perspektivischen Teilschnitt eines Deckbandbereichs einer Schaufel einer Gasturbine nach einer weiteren Ausführung der vorliegenden Erfindung; und
- Fig. 9:: einen perspektivischen Teilschnitt eines Schaufelfußbereichs einer Schaufel einer Gasturbine nach einer weiteren Ausführung der vorliegenden Erfindung.

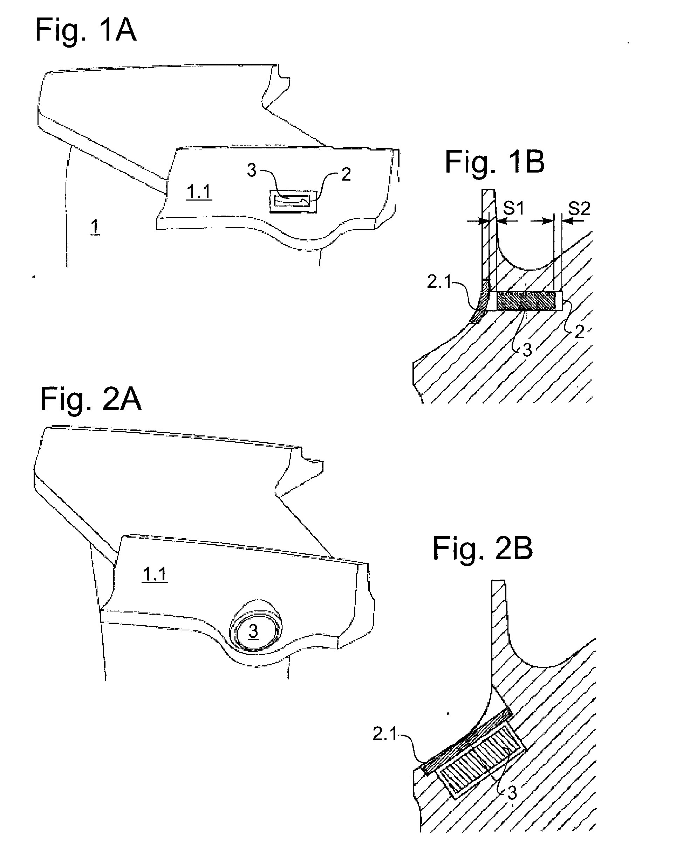

Fig. 1 zeigt einen Außendeckbandbereich einer Schaufel 1 einer Gasturbine nach einer Ausführung der vorliegenden Erfindung mit einem Außendeckbandflügel mit einer geöffneten Stoßkammer, in der ein kreisscheibenförmiger Impulskörper 3 aufgenommen ist. Die Stoßkammer ist im Betriebszustand der Schaufel durch einen Deckel 2.1 verschlossen, der in dem vergrößerten Schnitt des Stoßkammerbereichs der Fig. 1B, erkennbar, in Fig. 1A jedoch weggelassen ist.

Die Stoßkammer weist eine, wenigstens im Wesentlichen, quaderförmige Innenkontur auf, welche beispielsweise beim Gießen der Schaufel urgeformt oder anschließend materialabtragend hergestellt, beispielsweise gefräst, sein kann. In dem Schnitt der Fig. 1B weist der kreisscheibenförmige Impulskörper eine quaderförmige Außenkontur auf. Zwischen dieser und den parallelen Seitenwände ist in dem Schnitt der Fig. 1B ein Spiel S1+S2 vorgesehen, das zwischen 10 µm und 1,5 mm beträgt. Diese Vorzugsstoßrichtung ist in Richtung einer Eigenschwingform der Schaufel ausgerichtet. In einem vertikalen Schnitt senkrecht zur Bildebene der Fig. 1B weist der kreisscheibenförmige Impulskörper ebenfalls eine quaderförmige Außenkontur auf. Zwischen dieser und den parallelen Seitenwände ist in diesem Schnitt in einer Ausführung in horizontaler Richtung ebenfalls ein Spiel vorgesehen, das zwischen 10 µm und 1,5 mm beträgt, so dass der Impulskörper einen horizontalen Freiheitsgrad in beiden Schnitten aufweist. In einer anderen Ausführung ist in dem vertikalen Schnitt senkrecht zur Bildebene der Fig. 1B hingegen in horizontaler Richtung eine Spielpassung vorgesehen, die den Impulskörper ausschließlich in der in Fig. 1B horizontalen Vorzugsstoßrichtung führt. In einem horizontalen Schnitt senkrecht zur Bildebene der Fig. 1B weist der Impulskörper eine kreisscheibenförmige Außenkontur auf. Zwischen den beiden Stirnseiten des kreisscheibenförmigen Impulskörpers und den diesen gegenüberliegenden Seiten der quaderförmigen Stoßkammer ist eine Spielpassung vorgesehen, die den Impulskörper ausschließlich in in Fig. 1B horizontaler Richtung führt.

Die Masse des aus einer Nickel- oder Kobaltlegierung oder Keramik hergestellten Impulskörpers beträgt zwischen 10 mg und höchstens 1,5 g.

Nachdem die Stoßkammer in der Schaufel ausgebildet und der Impulskörper in diese Stoßkammer eingeführt worden ist, wird die Stoßkammer durch den Deckel 2.1 verschlossen, der mit der Außenkontur der Schaufel fluchtet, wie in Fig. 1B erkennbar.

Im Betrieb führt der Impulskörper 3 Stöße in der bzw. den durch die Stoßkammer 2 definierten Vorzugsstoßrichtungen aus, die durch das Spiel zwischen Impulskörper und Stoßkammer in dieser bzw. diesen Richtungen bestimmt werden und auf neuartige Weise Schaufelschwingungen dämpfen.

Fig. 2A, 2B zeigen in Fig. 1A, 1B entsprechender Weise eine Schaufel nach einer weiteren Ausführung der vorliegenden Erfindung. Einander entsprechende Elemente sind durch gleiche Bezugszeichen bezeichnet, so dass auf die vorstehende Beschreibung Bezug genommen und nachfolgend nur auf die Unterschiede eingegangen wird.

Bei der Ausführung der Fig. 2 wird der kreisscheibenförmige Impulskörper 3 nicht in seiner radialen Richtung, sondern in seiner axialen Richtung (links oben nach rechts unten in Fig. 2B) in die Stoßkammer eingeführt, die daraufllin durch den Deckel 2.1 verschlossen wird.

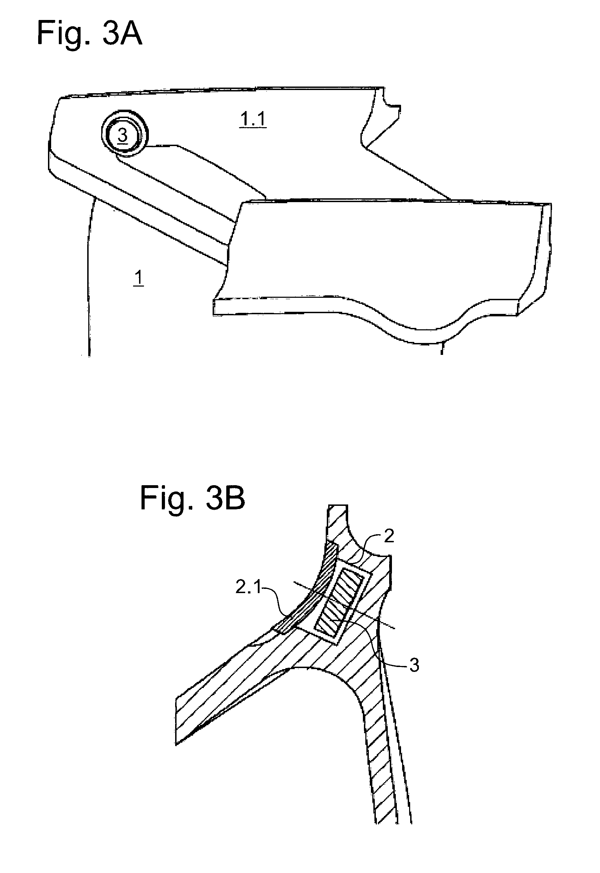

Fig. 3A, 3B zeigen in Fig. 1, 2 entsprechender Weise eine Schaufel nach einer weiteren Ausführung der vorliegenden Erfindung. Einander entsprechende Elemente sind durch gleiche Bezugszeichen bezeichnet, so dass auf die vorstehende Beschreibung Bezug genommen und nachfolgend nur auf die Unterschiede eingegangen wird.

Bei der Ausführung der Fig. 3 ist der Impulskörper bzw. die Stoßkammer auf der axial innenliegenden Seite des Außendeckbandflügels 1.1 angeordnet.

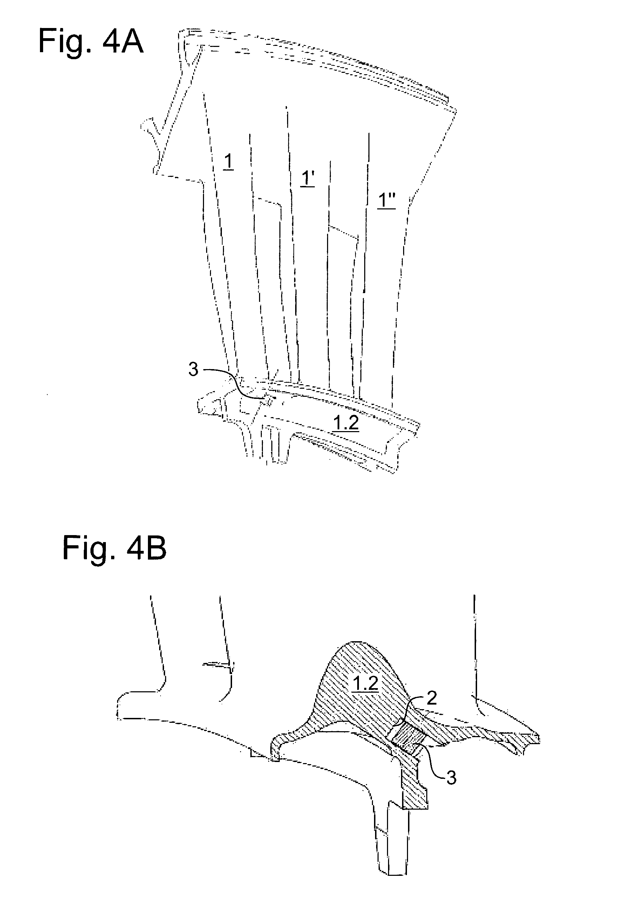

Fig. 4B zeigt in Fig. 1B, 2B bzw. 3B entsprechender Weise einen vergrößerten Schnitt des Stoßkammerbereichs einer Schaufel nach einer weiteren Ausführung der vorliegenden Erfindung, die in Fig. 4A in perspektivischer Ansicht dargestellt ist. Einander entsprechende Elemente sind durch gleiche Bezugszeichen bezeichnet, so dass auf die vorstehende Beschreibung Bezug genommen und nachfolgend nur auf die Unterschiede eingegangen wird.

Bei der Ausführung der Fig. 4 ist die Stoßkammer 2 bzw. der Impulskörper 3 in einem Schaufelfuß 1.2 angeordnet, mit dem nicht nur die Schaufel 1, sondern auch zwei weitere Schaufeln 1', 1" integral ausgebildet sind.

Die Stoßkammer wird bei der Montage durch den Rotor oder die Nabe der Turbomaschine (nicht dargestellt) verschlossen.

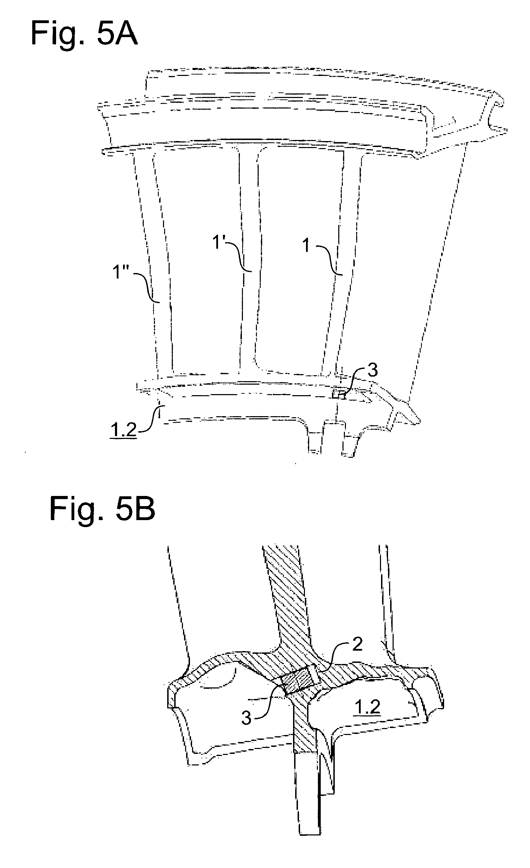

Fig. 5A, 5B zeigen in Fig. 4 entsprechender Weise eine Schaufel nach einer weiteren Ausführung der vorliegenden Erfindung. Einander entsprechende Elemente sind durch gleiche Bezugszeichen bezeichnet, so dass auf die vorstehende Beschreibung Bezug genommen und nachfolgend nur auf die Unterschiede eingegangen wird.

Bei der Ausführung der Fig. 5 ist der Impulskörper bzw. die Stoßkammer auf der gegenüberliegenden Seite des Schaufelfußes 1.2 angeordnet. Allgemein kann die Stoßkammer auf einer Eintritts- oder Austrittsseite eines Schaufelfußes angeordnet sein.

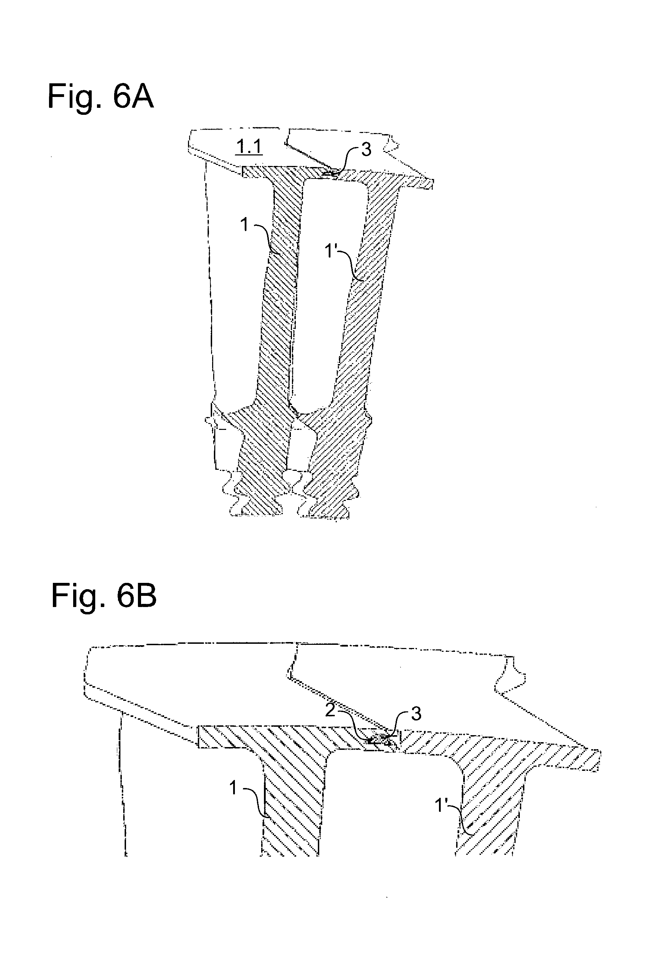

Fig. 6B zeigt in Fig. 1B, 2B, 3B, 4B bzw. 5B entsprechender Weise einen vergrößerten Schnitt des Stoßkammerbereichs einer Schaufel nach einer weiteren Ausführung der vorliegenden Erfindung, die in Fig. 6A in einem Schnitt dargestellt ist. Einander entsprechende Elemente sind durch gleiche Bezugszeichen bezeichnet, so dass auf die vorstehende Beschreibung Bezug genommen und nachfolgend nur auf die Unterschiede eingegangen wird.

Bei der Ausführung der Fig. 6 wird die Stoßkammer nicht von einem Deckel, sondern einer benachbarten Schaufel 1' bei der Montage verschlossen.

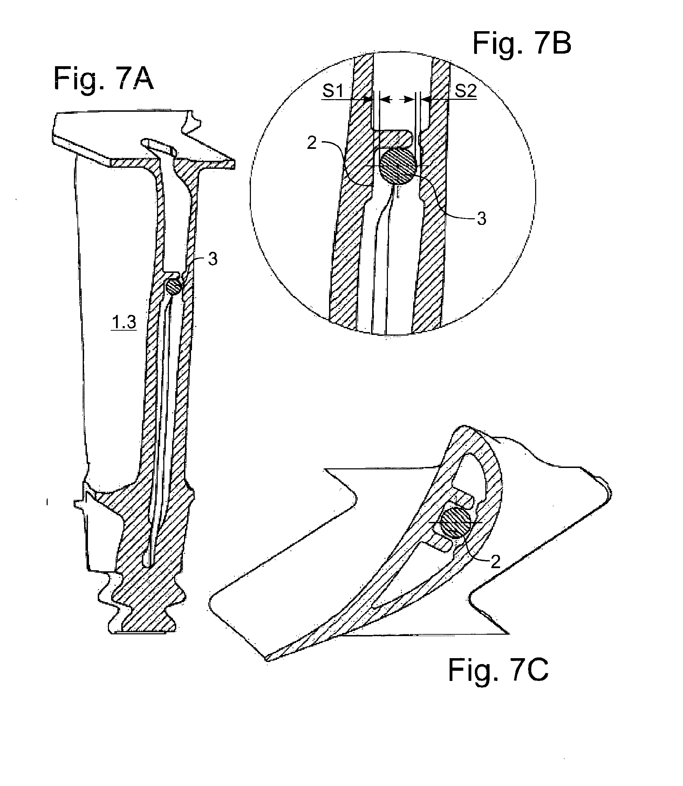

Fig. 7A zeigt in Fig. 6A entsprechender Weise einen Schnitt einer Schaufel nach einer weiteren Ausführung der vorliegenden Erfindung, Fig. 7B einen vergrößerten Ausschnitt des Stoßkammerbereichs dieser Fig. 7A, Fig. 7C einen Querschnitt durch diesen Stoßkammerbereich der Fig. 7B.

Die Schaufel 1 der Fig. 7 ist eine Hohlschaufel mit einem Schaufelblatt 1.3 mit einem Kühlkanal, in dem die Stoßkammer 2 urgeformt ist. Im Betrieb wird durch gyroskopische Kräfte ein kugelförmiger Impulskörper 3 in die einseitig offene Stoßkammer 2 getrieben, in der er in in Fig. 7B horizontaler Richtung ein Spiel S1+S2 aufweist, das zwischen 10 µm und 1,5 mm beträgt.

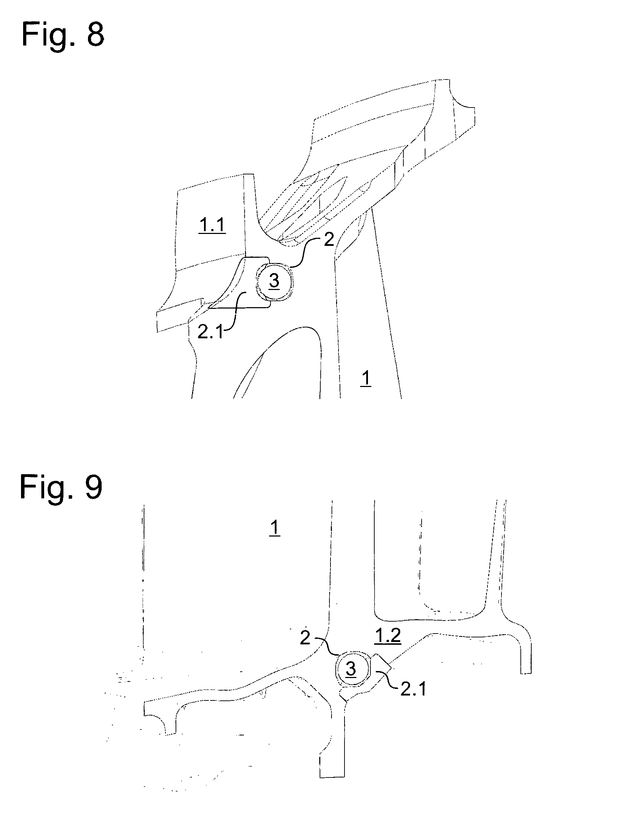

Fig. 8 zeigt in Fig. 1 bis 3 ähnlicher Weise eine Schaufel nach einer weiteren Ausführung der vorliegenden Erfindung. Einander entsprechende Elemente sind durch gleiche Bezugszeichen bezeichnet, so dass auf die vorstehende Beschreibung Bezug genommen und nachfolgend nur auf die Unterschiede eingegangen wird.

Bei der Ausführung der Fig. 8 ist der Impulskörper 3 in der Stoßkammer 2 im Außendeckbandflügel 1. der Schaufel 1 kugelförmig ausgebildet, wobei die Stoßkammer durch einen Deckel 2.1 verschlossen ist.

Fig. 9 zeigt in Fig. 4, 5 ähnlicher Weise eine Schaufel nach einer weiteren Ausführung der vorliegenden Erfindung. Einander entsprechende Elemente sind durch gleiche Bezugszeichen bezeichnet, so dass auf die vorstehende Beschreibung Bezug genommen und nachfolgend nur auf die Unterschiede eingegangen wird.

Bei der Ausführung der Fig. 9 ist der Impulskörper 3 in der Stoßkammer 2 im Schaufelfuß 1.2 der Schaufel 1 ebenfalls kugelförmig ausgebildet. Zudem ist die Stoßkammer 2 durch einen Deckel 2.1 verschlossen.

### Bezugszeichenliste

1,1',
1" Schaufel
1.1 Außendeckbandflügel
1.2 Schaufelfuß
1.3 Schaufelblatt
2 Stoßkammer
2.1 Deckel
3 Impulskörper
S1+S2 Spiel

## Patentansprüche

1. Schaufel (1) für eine Turbomaschine, mit einer Stoßkammer (2), **dadurch gekennzeichnet, dass** in der Stoßkammer ein einziger Impulskörper (3) angeordnet ist, wobei ein Spiel (S1+S2) zwischen dem Impulskörper und der Stoßkammer in wenigstens einer Richtung wenigstens 10 µm und/oder höchstens 1,5 mm beträgt.

2. Schaufel nach Anspruch 1, **dadurch gekennzeichnet, dass** eine Masse des Impulskörpers wenigstens 10 mg und/oder höchstens 1,5 g beträgt.

3. Schaufel nach einem der vorhergehenden Ansprüche, **dadurch gekennzeichnet, dass** der Impulskörper, wenigstens im Wesentlichen, kugel- oder scheibenförmig, insbesondere kreisscheibenförmig, ausgebildet ist und/oder aus einer Nickel- oder Kobaltlegierung oder Keramik hergestellt ist.

4. Schaufel nach einem der vorhergehenden Ansprüche, **dadurch gekennzeichnet, dass** die Stoßkammer, wenigstens ein Paar einander gegenüberliegender, insbesondere paralleler Innenwände aufweist, welche zwischen sich je eine Vorzugsstoßrichtung definieren, wobei ein Spiel zwischen dem Impulskörper und der Stoßkammer in dieser Vorzugsstoßrichtung wenigstens 10 µm und/oder höchstens 1,5 mm beträgt.

5. Schaufel nach einem der vorhergehenden Ansprüche, **dadurch gekennzeichnet, dass** die Stoßkammer in einem Außendeckband, insbesondere einem Außendeckbandflügel (1.1), einem Schaufelblatt (1.3) oder einem Schaufelfuß (1.2) der Schaufel angeordnet ist.

6. Schaufel nach einem der vorhergehenden Ansprüche, **dadurch gekennzeichnet, dass** die Stoßkammer durch einen, insbesondere mit einer Außenkontur der Schaufel fluchtenden, Deckel (2.1), eine angrenzende Schaufel (1'), ein Gehäuse, eine Nabe oder einen Rotor der Turbomaschine verschlossen ist.

7. Schaufel nach einem der vorhergehenden Ansprüche, **dadurch gekennzeichnet, dass** die Stoßkammer zusammen mit der Schaufel urgeformt, materialabtragend in der Schaufeloberfläche hergestellt oder durch eine in einer Aussparung in der Schaufel angeordnete Kalotte definiert ist.

8. Schaufel nach einem der vorhergehenden Ansprüche, **dadurch gekennzeichnet, dass** die Schaufel eine Lauf- oder Leitschaufel ist.

9. Turbomaschine, insbesondere Gasturbine, insbesondere Flugtriebwerk-Gasturbine, mit wenigstens einer Verdichter- und/oder Turbinenstufe mit wenigstens einer Schaufel nach einem der vorhergehenden Ansprüche.

10. Verfahren zum Herstellen einer Schaufel nach einem der vorhergehenden Ansprüche, **dadurch gekennzeichnet, dass** die Stoßkammer in der Schaufel ausgebildet, der Impulskörper in die Stoßkammer eingeführt und die Stoßkammer anschließend verschlossen wird.
